# EUROPÄISCHE PATENTSCHRIFT

(11) **EP 1 362 962 B1**
(45) Veröffentlichungstag und Bekanntmachung des Hinweises auf die Patenterteilung: **31.12.2008**
(21) Anmeldenummer: 03010756.9
(22) Anmeldetag: 14.05.2003
(51) Int. Cl.: E03F 5/10

(54) **Verfahren zur Regenwasserbehandlung und Abflusssteuerung**
Method for rain water treatement and flow controlling
Procédé pour traitement d'eau et contrôle de flux d'eau

(30) Priorität: 14.05.2002 DE 10221525
(43) Veröffentlichungstag der Anmeldung: 19.11.2003
(73) Patentinhaber: Güthler Ingenieurteam GmbH, 79761 Waldshut-Tiengen (DE)
(72) Erfinder: Güthler, Harald, 79790 Küssaberg-Küssnach (DE)
(74) Vertreter: Weiss, Peter

(56) Entgegenhaltungen:
- DE-A- 2 506 126
- DE-A- 2 809 624
- DE-A- 4 025 463
- DE-A- 10 214 305
- DE-A- 19 859 415
- DE-C- 547 608

## Beschreibung

Die vorliegende Erfindung betrifft ein Verfahren zur Regenwasserbehandlung und Abflusssteuerung, bei welchem ein Abflussstrom über einen Hauptsammler oder eine beliebige Zuleitung einer Speicherkaskade zugeführt und nach dem Durchströmen der Speicherkaskade zu einem Klärwerk geleitet wird sowie eine Anordnung zum Durchführen des Verfahrens.

Mit derartigen Verfahren werden, Regenwasserbehandlungen und Abflusssteuerungen, durchgeführt. Herkömmlich ist bekannt, dass mittels übereinander angeordnete Speicherkaskaden mit Grundablassung und Überlauf ein Abflussstrom vergleichsmässig wird und in den Speicherkaskaden eine Vergleichmässigung des Abflussstromes erfolgen soll.

Übersteigt der Abflussstrom die Kapazität der Speicherkaskaden, so wird der Überschuss des Abflussstromes einer der Speicherkaskaden nachgeschalteten Entlastung zugeführt, wobei die untenliegende Entlastung von der untersten Kaskade in Vorfluter oder Becken erfolgt.

Nachteilig daran ist, dass bei schwankenden Abflüssströmen zur Erzeugen eines konstanten dem Klärwerk zuzuführenden Abflussstromes, keine ausreichende Sedimentation zur Regenwasserbehandlung erfolgt, und daher das Gesamtvolumen des rein anrechenbaren Regenwassers bei der Regenwasserbehandlung auf etwa 2/3 des ursprünglichen Volumens reduziert ist.

Ferner ist der Sedimentationsprozess in Folge von Durchströmung der entlasteten Menge bzw. des erhöhten Volumenstromes durch die Speicherkaskade gestört und beeinträchtigt, was unerwünscht ist. Sämtliche Speicherkaskaden und/oder Speicher werden dem vollständigen Volumenstrom vor der Entlastung durchströmt, was insbesondere die Sedimentation beeinträchtigt und eine Abflusssteuerungserzielung eines konstanten Abflussstromes zum Klärwerk erheblich beeinträchtigt.

Die DE 28 09 624 A offenbart ein Kanalisationssystems, bei welchem in einem Hauptkanal mehrere Schlauchwehre kaskadenartig vorgesehen sind. Der Hauptkanal mündet in eine Kläranlage.

Ein Regenabschlagsbecken mit Wehrklappe und Schieber ist in der DE 25 06 126 beschrieben. Dort schliesst endseits an einem Kanal, enthaltend eine Mehrzahl von Kaskaden, eine Wehrklappe an.

Der vorliegenden Erfindung liegt die Aufgabe zugrunde ein Verfahren sowie eine Anordnung zum Durchführen des Verfahrens zu schaffen, mit welchen die genannten Nachteile beseitigt werden und mit welchen diese Sedimentation sowie auch die Abflusssteuerung erheblich verbessert werden soll. Zudem soll eine entsprechende Anordnung wesentlich kostengünstiger herzustellen, einfacher zu warten, leicht zu steuern und zu regeln sein.

Zur Lösung dieser Aufgabe führen die Merkmale des Patentanspruches 1 sowie des Patentanspruches 9.

Bei der vorliegenden Erfindung ist von wesentlicher Bedeutung, dass zumindest einer Speicherkaskade eine Entlastung vorgeschaltet ist, wobei zwischen Speicherkaskade und Entlastung eine Zuflussregelung über ein Zuflussregler erfolgt. Dabei wird in den einzelnen Speicherkaskaden der tatsächliche Abflussstrom durch entsprechende Einrichtungen gemessen. Dieser wird auch vor der Entlastung gemessen.

Der über einen Hauptsammler, über eine beliebige Zuleitung, Kanal od. dgl. ankommende Abflussstrom gelangt daher zuerst ggf. über vorgeschaltete Regler oder Abflussbremsen in eine Entlastung, die einen ganz bestimmten bestimmbaren und regelbaren Abflussstrom bzw. Durchfluss in die nachfolgenden Speicherkaskaden regelt. Dabei kann der Durchfluss aus der Entlastung in die einzelnen Speicherkaskaden in Abhängigkeit der Durchflussgeschwindigkeit bzw. Durchströmgeschwindigkeit des Abflusstromes durch die Speicherkaskaden geregelt werden, so dass an der letzten Speicherkaskade ein konstanter Volumenstrom zur Weiterleitung an das Klärwerk entsteht. Dieser ist ebenfalls messbar in den einzelnen Speicherkaskaden.

Dies hat zum Vorteil, dass die Speicherkaskaden nur mit dem tatsächlichen an das Klärwerk weiterzuleitenden Volumenstrom bzw. Abflussstrom durchströmt werden, was einen äusserst günstigen Sedimentationsprozess zur Folge hat. Dabei können jeder Speicherkaskade Überläufe, Regler, Abflussbremsen oder Einrichtungen zur Durchflussmessung zugeordnet sein, die dann über die entsprechende Steuerung eine Zuflussregelung bzw. eine Regelung der Entlastung ermöglicht. Die einzelnen Speicherkaskaden können bspw. aus geschlossenen Rohren oder offenen Profilen bestehen, die bis zu einer genau definierten rechnerischen ermittelten oder durch Zwangspunkte definierte Höhe eingestaut werden, so dass deren Volumen zur Regenwasserbehandlung aktiviert wird, wobei die Speicherkaskaden von oben nach unten befüllt werden können. Dabei wird ferner gewährleistet, dass durch die Anordnung eine Zuflusssteuerung erfolgt und eine Zuflussmenge bzw. ein Abflussstrom so gesteuert wird, dass während des Befüllvorganges der Kaskaden keine gefährlichen, überdimensionierten Ausflüsse erzeugt werden und dass bei Vollfüllung der Kaskaden die Zuflussmenge bzw. der Abflussstrom der konstant zu haltenden Abflussmenge in der letzten Kaskade entspricht.

Dadurch dass an jeder Kaskade ein Regler, eine Abflussbremse zur Abflussverzögerung angeordnet ist, wird eine definierte Wassermenge gesteuert oder nicht gesteuert, kontinuierlich oder diskontinuierlich, intermetierend, pulsierend mit einer ganz bestimmten Menge abgeführt, so dass sich bei grösserer Zulaufmenge ein Rückstau bildet, der bis zu einer vorher den Anforderungen gemäss definierten Höhe ansteigt und bei Überschreitung dieser Höhe über eine Überlaufswelle an dem Abflussverzögerungsorgang bzw. Regler überlaufende Menge in die untenliegende Kaskade zufliesst und diese gemeinsam mit dem Grundablass füllt.

Der diskontinuierliche, intermetierende, pulsierende Abflussstrom wird über eine Steuerung erzeugt, welche eine Grundablassöffnung kurzfristig verschliesst und in vorgegebenen Zeitintervallen öffnet und dann wieder verschliesst. Hierdurch kann eine Spülwelle erzeugt und die Sedimentationen, die dort abgelagert sind, in Richtung Klärwerk weiter transportiert werden.

Dabei kann über entsprechende EDV-Programme der Abflussstrom exakt berechnet werden und für unterschiedliche Betriebszustände simuliert und den örtlichen Bedürfnissen angepasst, optimiert und errechnet werden.

Die jeweiligen Betriebszustände werden über Messeinrichtungen erfasst und über Datenspeicher mittels Fernwirktechnik an einen beliebigen Ort zur Überwachung übertragen, wobei dann über Zulaufschieber über eine Fernwirktechnikanlage die Anordnung bedient werden kann.

Bei Einstau der obenliegenden Kaskade durch die unterhalb liegende Kaskade wird der pulsierende, diskontinuierliche Abflussstrom im Grundablass unterbrochen und wird durch Veränderung des Grundablassquerschnittes über bspw. Schwimmer, Regler od. dgl. Ablassblenden oder Regler ein nun konstanter und kontinuierlicher Abfluss eingestellt.

Die Regler bzw. Abflussverzögerer, welche die Kaskaden einstauen und während des Füllvorgangs eine vorbestimmte definierte Abflussmenge im Grundablass weiterleiten können bspw. aus zwei flügligen Toren etc. bestehen, welche sich bei Vollfüllung der Kaskade geschlossen halten und bei Erreichen einer vorher definierten Höhe sich soweit öffnen, dass kein Überlauf mehr stattfindet und die zuvor definierte Wasserspiegellage konstant eingehalten wird. Diese können durch unterschiedliche Hilfsmittel Motoren, Getriebe od. dgl. gesteuert werden. Hierauf sei die Erfindung nicht beschränkt.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Draufsicht auf eine Anordnung zur Regenwasserbehandlung und Abflusssteuerung mittels Speicherkaskaden;
Figur 2 eine schematisch dargestellte Draufsicht auf eine weitere Anordnung zur Regenwasserbehandlung und Abflusssteuerung mittels Speicherkaskaden.

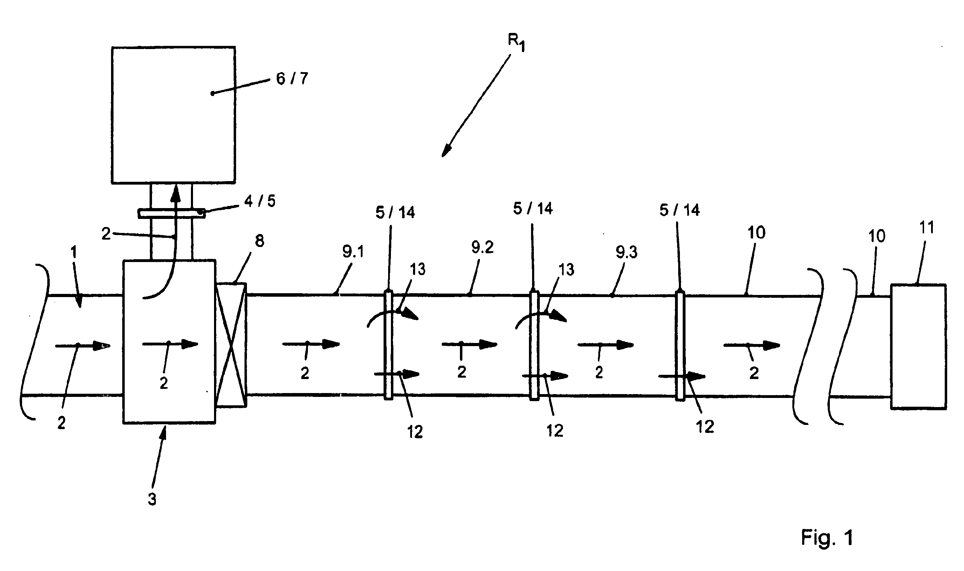

Gemäss Figur 1 weist eine erfindungsgemässe Anordnung R₁ zur Regenwasserbehandlung und Abflusssteuerung einen Hauptsammler 1 auf der als beliebige Zuleitung, Kanal od. dgl. ausgebildet sein kann. Über diesen Hauptsammler 1 gelangt ein Abflussstrom 2 aus Wasser, Abwasser, Regenwasser etc. zu einer erfindungsgemässen Entlastung 3. Von dort kann über entsprechende Abflussbremsen 4 bzw. Regler 5 eine Entlastung des Abflussstromes 2 in Vorfluter 6 oder Becken 7 erfolgen.

Die Abflussbremse 4 bzw. der Regler 5 steuert einen Volumenstrom der Entlastung 3 in die Vorfluter 6 und Becken 7.

Im Anschluss an die erfindungsgemässe obenliegende Entlastung 3, ist dieser ein Zuflussregler 8 nachgeschaltet, an welchen eine Mehrzahl von einzelnen Speicherkaskaden 9.1 bis 9.3 anschliessen.

Die einzelnen Speicherkaskaden 9.1 bis 9.3 sind kaskadenartig mit einem Gefälle versehen. Von der letzten bzw. untersten Speicherkaskade 9.3 gelangt der Abflussstrom 2 über einen Kanal 10 zu einem Klärwerk 11.

Wichtig ist bei der vorliegenden Erfindung, dass die Speicherkaskaden 9.1 bis 9.3 mit einem Gefälle kaskadenartig angeordnet sind, wobei die Speicherkaskade 9.1 die oberste und Speicherkaskade 9.3 die unterste niedrigst gelegene Speicherkaskade ist.

Die Funktionsweise der vorliegenden Erfindung ist folgende:

Der Abflussstrom 2 staut sich insbesondere bei Regenwassereinstau an, und gelangt zur Entlastung 3. Dort teilt sich der Abflusstrom 2 auf und wird zumindest teilweise ggf. gesteuert über die Abflussbremse 4 bzw. dem Regler 5 in den Vorfluter 6 bzw. Becken 7 geleitet, damit ein konstanter regelbarer Abflussstrom 2 über den Zuflussregler 8 der Kaskade 9.1 zugeführt wird.

Dieser Abflussstrom 2 gelangt durch einen Grundablass 12 und über einen Überlauf 13 in die nächste Kaskade 9.2. Dabei kann jede Kaskade 9.1 bis 9.3 mit einem Regler 5 und/oder einer Einrichtung 14 zur Durchflussmessung versehen sein.

Wichtig bei der vorliegenden Erfindung ist jedoch, dass der Abflussstrom 2, der aus dem Grundablass 12 der letzten Speicherkaskade 9.3 austritt konstant gehalten wird, um einen konstanten Abflussstrom 2 dem Klärwerk 11 zuzuführen. Ferner ist wichtig bei der vorliegenden Erfindung, dass in der letzten Speicherkaskade 9.3 kein Überlauf 13 über den Regler 5 bzw. über den Überlauf 13 erfolgt. Lediglich der konstant geregelte Abflussstrom 2 wird dem Klärwerk 11 zugeführt.

Dies wird erreicht, in dem vor Eintritt des Abflussstromes 2 in die Speicherkaskaden 9.1 bis 9.3 durch Zuflussregelung 8 ein Volumenstrom an den Abflussstrom 2 begrenzt wird, so dass sich hierdurch ein aus der Speicherkaskade 9.3 aus dem Grundablass 12 austretender konstanter Abflussstrom 2 bzw. Volumenstrom einstellt. Der Überschuss 13 an Abflussstrom 2 an Volumen wird über die erfindungsgemässe obenliegende Entlastung 3, die in den Speicherkaskaden 9.1 bis 9.3 vorgeschaltet ist, in den Vorfluter 6 bzw. das Becken 7 entlastet.

Regler 5 sowie Einrichtungen 14 dienen zur Steuerung des Zuflussreglers 8 bzw. der Abflussbremse 4 und des Reglers 5 zum Vorfluter 6 oder Becken 7.

Durch diese Anordnung wird ferner gewährleistet, dass beim Durchströmen der einzelnen Speicherkaskaden 9.1 bis 9.3 eine ausreichende Sedimentation in jeder Speicherkasdade 9.1 bis 9.3 erfolgt, da sich der Abflussstrom 2 aufteilt in eine Strömung in den Grundablass 12 und über den Überlauf 13. Zudem ist der Volumenstrom konstant gehalten, was ein Sedimentationsprozess fördert. Zu entsprechenden Spülwellen können dann diese Ablagerungen über den Grundablass 12 weiter transportiert werden, so dass eine höher anrechenbare Regenwasserbehandlung erfolgt.

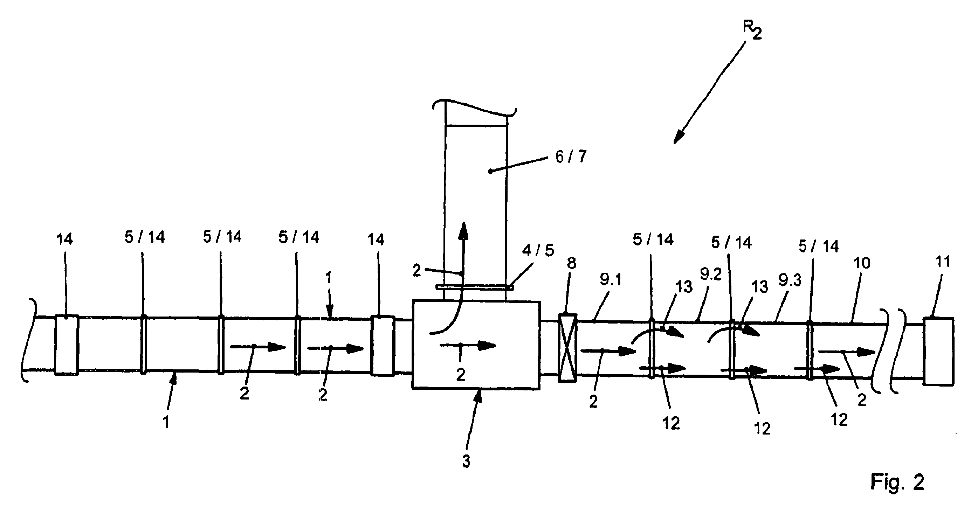

Im Ausführungsbeispiel der vorliegenden Erfindung gemäss Figur 2 ist eine Anordnung R₂ aufgezeigt, die im wesentlichen der Figur 1 entspricht. Unterschiedlich ist hier, dass zusätzlich im Hauptsammler 1 zumindest ein Regler 5 und zumindest eine Einrichtung 14 zur Bestimmung und Bestandsmessung des Durchflusses eingeschaltet sind.

Hierdurch kann der tatsächliche Durchfluss vor der Entlastung 3 exakt bestimmt werden, wodurch sich die Entlastung 3 sowie auch die einzelnen Regler 5 der Kaskaden 9.1 bis 9.3 exakt regeln lassen. Dabei wird ebenso wie oben beschrieben ein maximaler Abflussstrom 2 regelbar und steuerbar den Kaskaden 9.1 bis 9.3 zugeführt bzw. festgelegt, gerade so, dass aus der letzten Speicherkaskade 9.3 kein Überlauf 13 mehr erfolgt, sondern lediglich der konstante Volumenstrom bzw. Abflussstrom 2 durch den Grundablass 12 dem Kanal 10 bzw. dem Klärwerk 11 konstant zugeführt wird.

### Positionszahlenliste

| | | | | | |
|---|---|---|---|---|---|
| 1 | Hauptsammler | 34 | | 67 | |
| 2 | Abflussstrom | 35 | | 68 | |
| 3 | Entlastung | 36 | | 69 | |
| 4 | Abflussbremse | 37 | | 70 | |
| 5 | Regler | 38 | | 71 | |
| 6 | Vorfluter | 39 | | 72 | |
| 7 | Becken | 40 | | 73 | |
| 8 | Zuflussregler | 41 | | 74 | |
| 9 | Speicherkaskade | 42 | | 75 | |
| 10 | Kanal | 43 | | 76 | |
| 11 | Klärwerk | 44 | | 77 | |
| 12 | Grundablass | 45 | | 78 | |
| 13 | Überlauf | 46 | | 79 | |
| 14 | Einrichtung | 47 | | | |
| 15 | | 48 | | | |
| 16 | | 49 | | | |
| 17 | | 50 | | R₁ | Anordnung |
| 18 | | 51 | | R₂ | Anordnung |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zur Regenwasserbehandlung und Abflusssteuerung, bei welchem ein Abflussstrom (2) über einen Hauptsammler (1) oder eine beliebige Zuleitung einer Speicherkaskade (9.1 bis 9.3) zugeführt und nach dem Durchströmen der Speicherkaskade (9.3) zu einem Klärwerk (11) geleitet wird,
**dadurch gekennzeichnet,**
**dass** zur Steuerung eines konstanten Volumenstromes zum Klärwerk (11) in Strömungsrichtung vor den Speicherkaskaden (9.1 bis 9.3) eine steuerbare und regelbare Entlastung (3) des Abflussstromes (2) und zwischen der obersten Kaskade (9.1) und der Entlastung (3) eine Zuflussregelung mittels eines Zuflussreglers (8) erfolgt.

2. Verfahren nach Anspruch 1, **dadurch gekennzeichnet, dass** die Entlastung (3) oben liegend, oberhalb und vor der Speicherkaskade (9.1) erfolgt und je nach Volumen des Abflussstromes (2) in den einzelnen Kaskaden (9.1 bis 9.3) mittels Durchflussmessung eine obenliegende Entlastung (3) geregelt wird, um einen aus der Speicherkaskade (9.3) konstanten austretenden Abflussstrom (2) einzustellen, wobei in der letzten Speicherkaskade (9.3) kein Überlauf (13) erfolgt und der Abflussstrom aus dessen Grundablass (12) austritt.

3. Verfahren nach Anspruch 1 oder 2, **dadurch gekennzeichnet, dass** zwischen Entlastung (3) und der ersten Speicherkaskade (9.1) eine Zuflussregelung (8) unter Begrenzung des maximalen Durchflusses des Abflussstromes (2) in die Speicherkaskade (9.3) erfolgt.

4. Verfahren nach Anspruch 3, **dadurch gekennzeichnet, dass** über die Durchflussregelung ein maximaler Durchfluss festgelegt und durch eine Zuflussmessung der Abflussstrom (2) in die erste Speicherkaskade (9.1) in Abhängikeite des aus der letzten Speicherkaskade (9.3) austretenden und konstant zu haltenden Abflussstromes (2) kalibriert wird.

5. Verfahren nach wenigstens einem der Ansprüche 1 bis 4, **dadurch gekennzeichnet, dass** in jeder einzelnen Speicherkaskade (9.1 bis 9.3) eine Durchflussmessung erfolgt.

6. Verfahren nach wenigstens einem der Ansprüche 1 bis 5, **dadurch gekennzeichnet, dass** ein Überschüssiger Abflussstrom (2) der obenliegenden Entlastung (3), vor Eintritt in die zumindest eine Speicherkaskade (9.1 bis 9.3) in einen Vorfluter (6) oder in ein weiteres Becken (7) erfolgt.

7. Verfahren nach wenigstens einem der Ansprüche 1 bis 6, **dadurch gekennzeichnet, dass** im Bereich des Hauptsammlers (1) oder einer Zuleitung zumindest eine Abflussbremse (4), insbesondere ein Regler (5) vorgesehen ist, und im Hauptsammler (1), insbesondere vor der Entlastung (3) eine Bestandsmessung des Durchflusses des Abflussstromes (2) erfolgt.

8. Verfahren nach Anspruch 7, **dadurch gekennzeichnet, dass** eine Mehrzahl von Abflussbremsen (4) im Hauptsammler (1) vor der Entlastung (3) vorgesehen sind.

9. Anordnung zur Regenwasserbehandlun und Abflusssteuerung mit einem Hauptsammler (1) oder einer beliebigen Zuleitung, zumindest einer daran anschliessenden Speicherkaskade (9.1 bis 9.3), an welcher ein Kanal (10) zu einem Klärwerk (11) anschliesst, und mit einer zwischen dem Hauptsammler (1) und der zumindest einen Speicherkaskade (9.1 bis 9.3) in Strömungsrichtung obenliegenden Entlastung (3) **dadurch gekennzeichnet, dass** zwischen der obersten Kaskade (9.1) und der Entlastung (3) ein Zuflussregler (8) vorgesehen ist.

10. Anordnung nach Anspruch 9, **dadurch gekennzeichnet, dass** an die Entlastung (3) ein Vorfluter (6) oder ein weiteres Becken (7) anschliesst.

11. Anordnung nach Anspruch 9 oder 10, **dadurch gekennzeichnet, dass** im Hauptsammler (1) oder der beliebigen Zuleitung vor der Entlastung (3) zumindest eine Abflussbremse (4), insbesondere ein Abflussregler vorgesehen ist.

12. Anordnung nach wenigstens einem der Ansprüche 9 bis 11, **dadurch gekennzeichnet, dass** jeder Kaskade (9.1 bis 9.3) zumindest eine Abflussbremse (4), insbesondere ein Abflussregler zugeordnet ist.

13. Anordnung nach wenigstens einem der Ansprüche 9 bis 12,
**dadurch gekennzeichnet, dass** im Hauptsammler (1) vor der Entlastung (3), nach der Entlastung (3) und ggf. in jeder einzelnen Kaskade (9.1 bis 9.3) Einrichtungen (14) zur Bestandsmessung des Durchflusses des Abflussstromes (2) vorgesehen sind.

14. Anordnung nach wenigstens einem der Ansprüche 9 bis 13, **dadurch gekennzeichnet, dass** die Entlastung (3) oberhalb der obersten Kaskade (9.1) vorgeschaltet, insbesondere dem Hauptsammler (1) nachgeschaltet ist.

15. Anordnung nach wenigstens einem der Ansprüche 9 bis 14, **dadurch gekennzeichnet, dass** der Abflussstrom (2) der Entlastung (3) im Vorfluter (6) oder im Becken (7) regelbar, insbesondere steuerbar ist.

16. Anordnung nach wenigstens einem der Ansprüche 9 bis 15, **dadurch gekennzeichnet, dass** zur Steuerung eines aus der letzten Kaskade (9.3) konstanten austretenden Abflussstromes (2) der Zuflussregler (8) und/oder ein Abflussregler (4/5) der Entlastung (3) einstellbar, regelbar und steuerbar sind.

## Claims

1. Method of treating rainwater and controlling the drainage, wherein a drainage flow (2) is supplied via a principal storage unit (1) or any optional feed pipe of a cascade of storage means (9.1 to 9.3) and, after traversing the cascade of storage means (9.3), is conducted to a clarifying plant (11), **characterised in that,** to control a constant volumetric flow to the clarifying plant (11) in the flow direction upstream of the cascades of storage means (9.1 to 9.3), a controllable and regulatable discharge (3) of the drainage flow (2) is- effected and, between the uppermost cascade (9.1) and the discharge (3), the feed is regulated by means of a feed regulator (8).

2. Method according to claim 1, **characterised in that** the discharge (3) is effected at the top, above and upstream of the cascade of storage means (9.1), and, depending on the volume of the drainage flow (2) in the individual cascades (9.1 to 9.3), an upper discharge (3) is regulated by measuring the throughflow, in order to set a drainage flow (2) constantly emanating from the cascade of storage means (9.3), no overflow (13) occurring in the last cascade of storage means (9.3), and the drainage flow emanating from the bottom outlet (12) thereof.

3. Method according to claim 1 or 2, **characterised in that,** between the discharge (3) and the first cascade of storage means (9.1), a regulation of feed (8) is effected by limiting the maximum throughflow of the drainage flow (2) into the cascade of storage means (9.3).

4. Method according to claim 3, **characterised in that** a maximum throughflow is established by the regulation of the throughflow, and the drainage flow (2) into the first cascade of storage means (9.1) is calibrated by measuring the feed in dependence on the drainage flow (2), which emanates from the last cascade of storage means (9.3) and is to be kept constant.

5. Method according to at least one of claims 1 to 4, **characterised in that** a throughflow measurement is effected in each individual cascade of storage means (9.1 to 9.3).

6. Method according to at least one of claims 1 to 5, **characterised in that** any surplus drainage flow (2) from the upper discharge (3), prior to entering the at least one cascade of storage means (9.1 to 9.3), is conducted into a sewer system (6) or into an additional tank (7).

7. Method according to at least one of claims 1 to 6, **characterised in that** at least one drainage retarding means (4), more especially a regulator (5), is provided in the region of the principal storage unit (1) or a feed pipe, and the amount of the throughflow of the drainage flow (2) is measured in the principal storage unit (1), more especially upstream of the discharge (3).

8. Method according to claim 7, **characterised in that** a plurality of drainage retarding means (4) are provided in the principal storage unit (1) upstream of the discharge (3).

9. Arrangement for treating rainwater and controlling the drainage, having a principal storage unit (1) or any optional feed pipe, at least one cascade of storage means (9.1 to 9.3) which communicates therewith, and with which a duct (10) extending to a clarifying plant (11) communicates, and having an upper discharge (3) between the principal storage means (1) and the at least one cascade of storage means (9.1 to 9.3) when viewed with respect to the flow direction, **characterised in that** a feed regulator (8) is provided between the uppermost cascade (9.1) and the discharge (3).

10. Arrangement according to claim 9, **characterised in that** a sewer system (6) or an additional tank (7) communicates with the discharge (3).

11. Arrangement according to claim 9 or 10, **characterised in that** at least one drainage retarding means (4), more especially a drainage regulator, is provided in the principal storage unit (1) or in the optional feed pipe upstream of the discharge (3).

12. Arrangement according to at least one of claims 9 to 11, **characterised in that** at least one drainage retarding means (4), more especially a drainage regulator, is associated with each cascade (9.1 to 9.3).

13. Arrangement according to at least one of claims 9 to 12, **characterised in that** apparatuses (14) for measuring the amount of throughflow of the drainage flow (2) are provided in the principal storage unit (1) upstream of the discharge (3), downstream of the discharge (3), and possibly in each individual cascade (9.1 to 9.3).

14. Arrangement according to at least one of claims 9 to 13, **characterised in that** the discharge (3) is connected to the input end above the uppermost cascade (9.1) and, more especially, is connected to the output end of the principal storage unit (1).

15. Arrangement according to at least one of claims 9 to 14, **characterised in that** the drainage flow (2) of the discharge (3) can be regulated, more especially controlled, in the sewer system (6) or in the tank (7).

16. Arrangement according to at least one of claims 9 to 15, **characterised in that,** to control a drainage flow (2), constantly emanating from the last cascade (9.3), the feed regulator (8) and/or a drainage regulator (4/5) of the discharge (3) can be set, regulated and controlled.

## Revendications

1. Procédé pour le traitement d'eaux de pluie et le contrôle de l'écoulement d'eau, dans lequel un flux d'écoulement (3) est amené, par l'intermédiaire d'un collecteur principal (1) ou d'un conduit d'amenée quelconque, à une cascade d'accumulation (9.1 à 9.3) et est guidé, après le passage par la cascade d'accumulation (9.3), vers une station d'épuration (11),
**caractérisé par le fait**
**que** pour le réglage d'un volume de flux constant vers la station d'épuration (11) a lieu, dans la direction de l'écoulement, avant les cascades d'accumulation (9.1 à 9.3), une décharge contrôlable et réglable (3) du flux d'écoulement (2) et, entre la cascade supérieure (9.1) et la décharge (3), une régulation d'alimentation au moyen d'un régulateur d'alimentation (8).

2. Procédé selon la revendication 1, **caractérisé par le fait que** la décharge (3) a lieu dans le haut, au-dessus et avant la cascade d'accumulation (9.1) et qu'il est réglé, en fonction du volume du flux d'écoulement (2) dans les différentes cascades (9.1 à 9.3) au moyen d'une mesure de débit, une décharge dans le haut (3), pour régler un flux d'écoulement (2) constant sortant de la cascade d'accumulation (9.3), dans la dernière cascade d'accumulation (3.3) ne se produisant pas de surverse (13) et le flux d'écoulement sortant de sa sortie inférieure (12).

3. Procédé selon la revendication 1 ou 2, **caractérisé par le fait qu'**entre la décharge (3) et la première cascade d'accumulation (9.1) a lieu une régulation d'alimentation (3) avec limitation du débit maximal du flux d'écoulement (2) vers la cascade d'accumulation (9.3).

4. Procédé selon la revendication 3, **caractérisé par le fait que** par l'intermédiaire de la régulation de débit est fixé un débit maximal et que par une mesure d'alimentation est étalonné le flux d'écoulement (2) vers la première cascade d'accumulation (9.1) en fonction du flux d'écoulement (2) sortant de la dernière cascade d'accumulation (9.3) et à maintenir constant.

5. Procédé selon au moins l'une des revendications 1 à 4, **caractérisé par le fait que** dans chaque cascade d'accumulation individuelle (9.1 à 9.3) a lieu une mesure de débit.

6. Procédé selon au moins l'une des revendications 1 à 5, **caractérisé par le fait qu'**a lieu un flux d'écoulement en excès (2) de la décharge dans le haut (3), avant l'entrée dans l'au moins une cascade d'accumulation (9.1 à 9.3), dans un émissaire (6) ou dans un autre bassin (7).

7. Procédé selon au moins l'une des revendications 1 à 6, **caractérisé par le fait qu'**il est prévu, à l'endroit du collecteur principal (1) ou d'un conduit d'alimentation, au moins un frein d'écoulement (4), en particulier un régulateur (5), et, dans le collecteur principal (1), en particulier avant la décharge (3), une mesure de quantité du débit du flux d'écoulement (2).

8. Procédé selon la revendication 1, **caractérisé par le fait qu'**il est prévu une pluralité de freins d'écoulement (4) dans le collecteur principale (1) avant la décharge (3).

9. Aménagement pour le traitement d'eaux de pluie et le contrôle de l'écoulement avec un collecteur principal (1) ou un conduit d'alimentation quelconque, au moins une cascade d'accumulation (9.1 à 9.3) y raccordée, à laquelle se raccorde un canal (10) vers une station d'épuration (11) et avec une décharge (3) située, dans la direction de l'écoulement, dans le haut entre le collecteur principal (1) et l'au moins une cascade d'accumulation (9.1 à 9.3), **caractérisé par le fait qu'**entre la cascade supérieure (9.1) et la décharge (3) est prévu un régulateur d'alimentation (8).

10. Aménagement selon l'invention 9, **caractérisé par le fait qu'**à la décharge (3) est raccordé un émissaire (6) ou un autre bassin (7).

11. Aménagement selon l'invention 9 ou 10, **caractérisé par le fait que** dans le collecteur principal (1) ou le conduit d'alimentation quelconque est prévu, avant la décharge (3), au moins un frein d'écoulement (4), en particulier un régulateur d'écoulement.

12. Aménagement selon au moins l'une des revendications 9 à 11, **caractérisé par le fait qu'**à chaque cascade (5.1 à 9.3) est associé au moins un frein d'écoulement (4), en particulier un régulateur d'écoulement.

13. Aménagement selon au moins l'une des revendications 9 à 12, **caractérisé par le fait que** dans le collecteur principal (1) est prévu, avant la décharge (3), après la décharge (3) et éventuellement dans chaque cascade individuelle (9.1 à 9.3), des dispositifs (14) de mesure de quantité du débit du flux d'écoulement (2).

14. Aménagement selon au moins l'une des revendications 9 à 13, **caractérisé par le fait que** la décharge (3) est connectée dans le haut avant la cascade supérieure (9.1), en particulier connectée après le collecteur principal (1).

15. Aménagement selon au moins l'une des revendications 9 à 14, **caractérisé par le fait que** le flux d'écoulement (2) de la décharge (3) dans l'émissaire (6) ou le bassin (7) est réglable, en particulier contrôlable.

16. Aménagement selon au moins l'une des revendications 9 à 15, **caractérisé par le fait que**, pour la commande d'un flux d'écoulement (2) constant sortant de la dernière cascade (9.3), le régulateur d'alimentation (8) et/ou un régulateur d'écoulement (4/5) de la décharge (3) sont réglables et contrôlables.
